Europäisches Patentamt

**European Patent Office**

**Office européen des brevets**

(11) Publication number: **0 325 821**

**A2**

# EUROPEAN PATENT APPLICATION

(21) Application number: **88300601.7**

(22) Date of filing: **26.01.88**

(51) Int. Cl.⁴: **B64G 1/66 , B64G 4/00**

(43) Date of publication of application:
**02.08.89 Bulletin 89/31**

(84) Designated Contracting States:
**DE FR NL**

(71) Applicant: **BRITISH AEROSPACE PUBLIC LIMITED COMPANY**
**11 Strand**
**London WC2N 5JT(GB)**

(72) Inventor: **Brunnen, Alan British Aerospace Public**
**Limited Company Space & Communications Division**
**Arygke Way Stevenage Herts SG1 2AS(GB)**

(74) Representative: **Dowler, Edward Charles et al**
**British Aerospace Public Limited Company Corporate Patents Department Brooklands Road**
**Weybridge Surrey, KT13 OSJ(GB)**

(54) **Retaining device.**

(57) A retaining device especially for holding an articulated manipulator arm on board a spacecraft in its stowed position comprises two relatively linearly movable members, a drive coupled to produce the linear movement, and a grip latter coupled between the members so that, during the driven linear movement, it moves into engagement with a portion of the structure, e.g. the manipulator arm, to be retained and then laterally so as to positively clamp the portion in a fixed position. To hold an articulated structure, several retaining devices all driven by a common actuator can be arranged to grip the structure at appropriate positions.

EP 0 325 821 A2

# RETAINING DEVICE

This invention relates to retaining devices, more particularly but not exclusively a retaining device, and and arrangement of such devices, for retaining an articulated manipulator arm, such as might be provided on a spacecraft for example, in its stowed position.

It is proposed that the Hermes spacecraft should carry an articulated manipulator arm comprising a series of elongate portions joined one to another by hinge joints. When stowed, the portions of the arm lie alongside one another and alongside a cargo bay bulkhead. The arm must be strongly retained when stowed because of the large forces to which it will be subjected during launch and retrieval. It cannot be guaranteed that, after use, the arm can be returned very precisely to any particular stowed position. An object of the invention is to provide an appropriate retaining device and arrangement of such devices for carrying out this task.

According to one aspect of the invention, there is provided a retaining device comprising two relatively linearly movable members, a linear actuator coupled to the members for producing said relative linear movement thereof, and at least one gripping member having a lever portion engaging said members for said relative linear movement of the relatively linearly movable members to produce movement of the gripping member in the direction of said linear movement and in a direction lateral thereto.

According to a second aspect of the invention, there is provided a plurality of retaining devices as described above and mounted for gripping respective portions of apparatus to be retained, the actuator of each device comprising a rotary to linear motion converting device and all these converting devices being coupled to a common drive for rotating a rotatable member thereof.

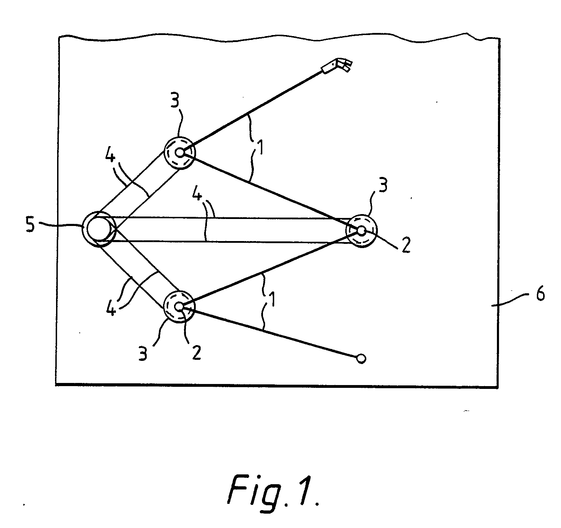

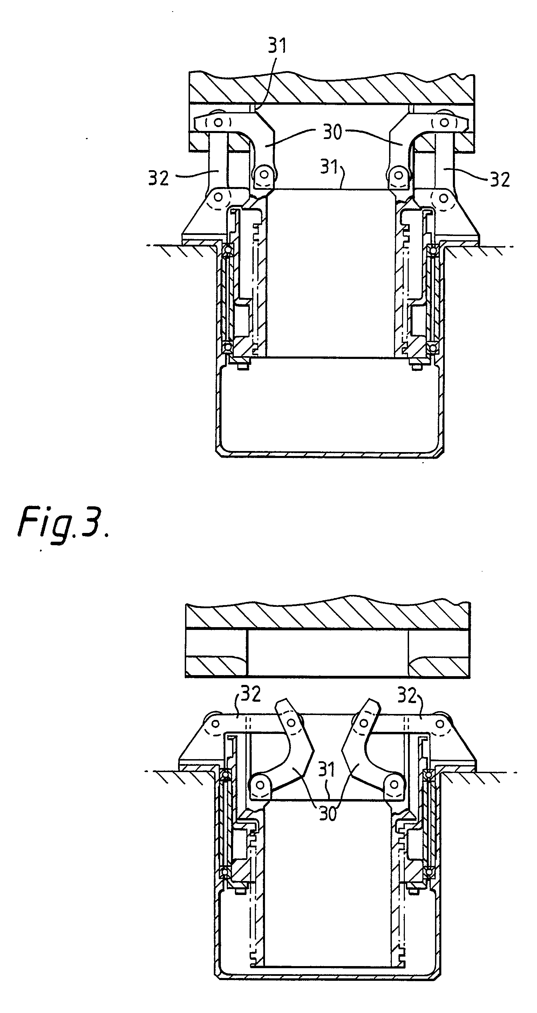

In the drawings, given by way of example, figure 1 is a diagram of a manipulator arm on board a spacecraft, and figures 3 to 5 are various views of three retaining device embodiments.

Figure 1 shows very diagrammatically a space craft cargo bay containing a manipulator arm made up of sections 1 hinged together by motor driven joints 2. The joints 2 are gripped to retain the arm in its stowed position by retaining devices 3 each comprising a rotary to linear motion converter driven by a respective cable drive 4 from a common motor drive 5. The motor drive and retaining devices are mounted on an end bulkhead 6 of the cargo bay.

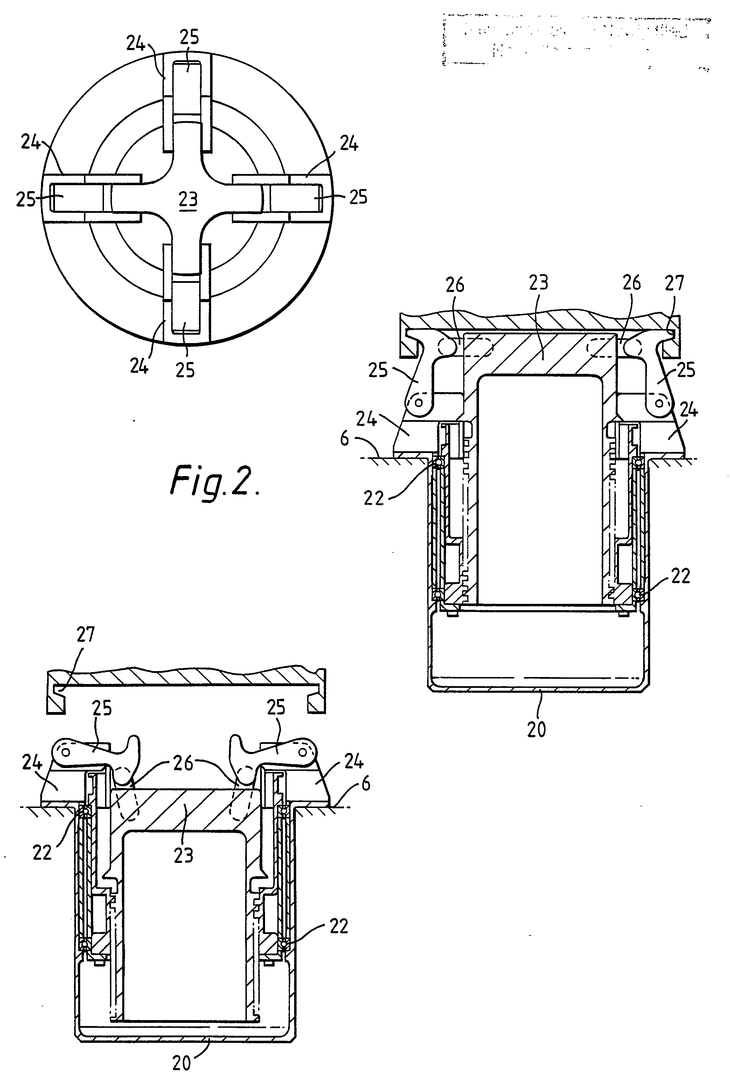

Figure 2 shows two sectional elevations of one retaining device in the gripping and retracted positions respectively. It also shows an end view. The device comprises a flanged housing 20 fixed to bulkhead 6 and containing a drum 21 mounted for rotation in bearings 22. The drum 21 has an internal square-section thread in which is engaged a similarly threaded piston member 23. Hinged to upstanding lugs 24 are four gripping members 25 which are also coupled to piston member 23 via links 26. As the piston moves up towards manipulator arm joint 23, the gripping members 25 rotate up and out and then a little way down again to securely retain the joint, this joint being provided with an appropriate recess 27 for receiving the gripping members. The drum 21 is rotated so as to linearly move piston 23, by a cable (not shown) wound around the drum and led off to the common drive motor 5.

In the second embodiment shown in figure 3, the two gripping members 30 are hinged to the linearly movable piston member 31 and coupled via links 32 to the fixed upstanding lugs. The arrangement and action of the device is otherwise like that of the figure 2 device.

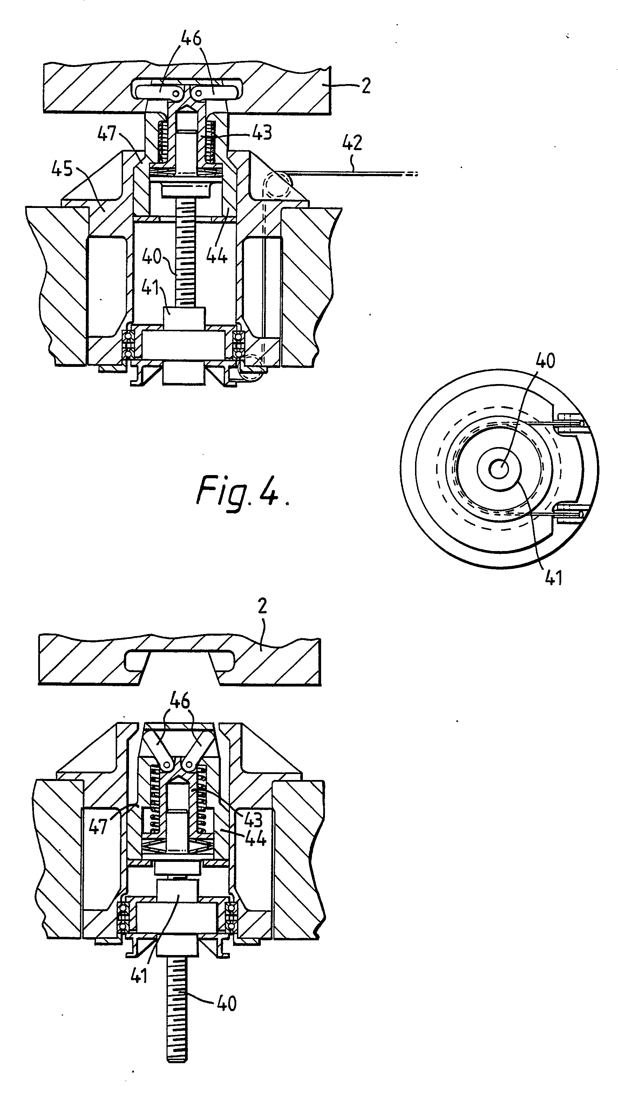

In figure 4, the linearly movable output member 40 of a ball-screw 41 driven by cable 42 is connected to an inner piston 43 which slides in an outer piston 44 which itself slides in fixed housing/support member 45. Gripping members 46 are hinged to inner piston 43 and engage piston 44 ahead of it until this is stopped by locating shoulder 47. Coilspring 48 then shortens and gripping members 46 are protruded laterally to grip joint 2.

## Claims

1. A retaining device comprising two relatively linearly movable members, a linear actuator coupled to the members for producing said relative linear movement thereof, and at least one gripping member having a lever portion engaging said members for said relative linear movement of the relatively linearly movable members to produce movement of the gripping member in the direction of said linear movement and in a direction lateral thereto.

2. A retaining device substantially as hereinbefore described with reference to the accompanying drawings.

3. A mechanism comprising a plurality of retaining devices each in accordance with claim 1 or claim 2 and mounted for gripping respective portions of apparatus to be retained, the actuator of each device comprising a rotary to linear motion converting device and all these converting devices being coupled to a common drive for rotating a rotatable member thereof.

*Fig.1.*

Fig.2.

Fig.3.

Fig. 4.